# EUROPEAN PATENT SPECIFICATION

(11) **EP 2 281 242 B1**
(45) Date of publication and mention of the grant of the patent: **15.08.2018**
(21) Application number: 09747434.0
(22) Date of filing: 13.05.2009
(51) Int. Cl.: G06F 13/00, G06F 17/30, G06F 3/06

(54) **MANAGING STORAGE OF INDIVIDUALLY ACCESSIBLE DATA UNITS**
VERWALTUNG DER SPEICHERUNG INDIVIDUELL ZUGÄNGLICHER DATENEINHEITEN
GESTION DE STOCKAGE D'UNITÉS DE DONNÉES INDIVIDUELLEMENT ACCESSIBLES

(30) Priority: 14.05.2008 US 120468
(43) Date of publication of application: 09.02.2011
(73) Proprietor: Ab Initio Technology LLC, Lexington, MA 02421 (US)
(72) Inventor: VISHNIAC, Ephraim, Meriwether, Arlington, MA 02474 (US); STANFILL, Craig, W., Lincoln, MA 01773 (US)
(74) Representative: Lloyd, Patrick Alexander Desmond
(86) International application number: PCT/US2009/043737
(87) International publication number: WO 2009/140350

(56) References cited:
- US-A1- 2005 234 997
- US-A1- 2005 234 997
- US-A1- 2006 047 684
- US-A1- 2006 123 035
- US-A1- 2006 212 539
- US-A1- 2007 208 783
- US-A1- 2008 016 130
- US-A1- 2008 016 130

## Description

### BACKGROUND

The invention relates to managing storage of individually accessible data units.

A database system can store individually accessible units of data or "records" in any of a variety of formats. Each record may correspond to a logical entity such as a credit card transaction and typically has an associated primary key used to uniquely identify the record. The record can include multiple values associated with respective fields of a record format. The records can be stored within one or more files (e.g., flat files or structured data files such as XML files). In compressed database systems individual records or values within records may be compressed when stored and decompressed when accessed to reduce the storage requirements of the system. US2005/234997 relates to file updating such as software management using difference files.

### SUMMARY

In general, in one aspect, a method includes determining a length of a file and storing the length of the file in a first memory location. An endpoint of a last complete record within the file is determined and the endpoint is stored in a second memory location. The length of the file stored in the first memory location is compared to a current length of the file, and a data structure associated with the file is updated beginning at the endpoint if the current length of the file exceeds the length of the file stored in the first memory location.

Aspects may include one or more of the following features. The data structure may be an associative data structure, such as a hash table or a binary tree. The endpoint may also represents an end of the file. The endpoint may precede an incomplete record in the file. The file may be checked for errors. Checking the file for errors may include determining whether the current length of the file is smaller than the length of the file stored in the first memory location. The file may be an uncompressed data file.

In general, in another aspect, a method includes simultaneously adding data from a data stream to a first file and to a buffer. Data associated with the buffer is transferred to a compressed file after a predefined condition is satisfied. After the data from the buffer has been transferred to the compressed file, a second file is created to receive data from the data stream.

Aspects may include one or more of the following features. The first file may be deleted after the data from the buffer has been transferred to the compressed file. Status information may identify whether the first file is active. The status information may be locked while the data associated with the buffer is being transferred to the compressed file. The status information may be updated to reflect the creation of the second file, a deletion of the first file, and a transfer of data between the buffer and the compressed file. While the status information is locked, the status information may not be accessible by indexing or search operations. The status information may be unlocked after it has been updated. The first file may be deleted after the status information has been updated. The predefined condition may be based on time. The predefined condition may be based on the size of the first file. The predefined condition may be based on a number of records.

In general, in another aspect, a computer-readable medium that stores executable instructions for use in obtaining a value from a device signal, the instructions causing a computer to determine a length of a file and store the length of the file in a first memory location. An endpoint of a last complete record within the file may be determined and the endpoint may be stored in a second memory location. The length of the file stored in the first memory location may be compared to a current length of the file. A data structure associated with the file may be updated beginning at the endpoint if the current length of the file exceeds the length of the file stored in the first memory location.

Aspects may include one or more of the following features. The data structure may be an associative data structure, such as a hash table or a binary tree. The endpoint may also represent an end of the file. The endpoint may precede an incomplete record in the file. The instructions may further cause the computer to check the file for errors. Checking the file for errors may include determining whether current length of the file is smaller than the length of the file stored in the first memory location. The file may be an uncompressed data file.

In general, in another aspect, a computer-readable medium stores executable instructions for use in obtaining a value from a device signal, the instructions causing a computer to simultaneously add data from a data stream to a first file and to a buffer. The data associated with the buffer is transferred to a compressed file after a predefined condition is satisfied. After the data from the buffer has been transferred to the compressed file, a second file is created to receive data from the data stream.

Aspects may include one or more of the following features. The first file may be deleted after the data from the buffer has been transferred to the compressed file. Status information may identify whether the first file is active. The status information may be locked while the data associated with the buffer is transferred to the compressed file. The status information may be updated to reflect the creation of the second file, a deletion of the first file, and a transfer of data between the buffer and the compressed file. While the status information is locked, the status information may not be accessible by indexing or searching operations. The status information may be unlocked after it has been updated. The first file may be deleted after the status information has been updated. The predefined condition may be based on time. The predefined condition may be based on the size of the first file. The predefined condition may be based on a number of records.

In general, in another aspect, a system includes means for determining a length of a file and storing the length of the file in a first memory location. The system further includes means for determining an endpoint of a last complete record within the file and storing the endpoint in a second memory location. The system further includes means for comparing the length of the file stored in the first memory location to a current length of the file, and means for updating a data structure associated with the file beginning at the endpoint if the current length of the file exceeds the length of the file stored in the first memory location.

In general, in another aspect, a system includes means for simultaneously adding data from a data stream to a first file and to a buffer. The system further includes means for transferring the data associated with the buffer to a compressed file after a predefined condition is satisfied, and means for creating a second file to receive data from the data stream after the data from the buffer has been transferred to the compressed file.

### DESCRIPTION OF DRAWINGS

FIG. 1 is a block diagram of a system for storing and retrieving records.
FIGS. 2A, 2B, 2C, and 2D are schematic diagrams of data processed by and stored in the system.
FIGS. 3A and 3B are tables showing false positive probabilities for different signature sizes.
FIGS. 4A and 4B are flowcharts of procedures for searching for records.
FIG. 5 is a flowchart of the procedure for querying records.
FIGS. 6A and 6B are schematic diagrams of appendable lookup files.
FIG. 7 is a flowchart of a procedure for querying an appendable lookup file.
FIG. 8 is a flowchart of a procedure for storing data.

### DESCRIPTION

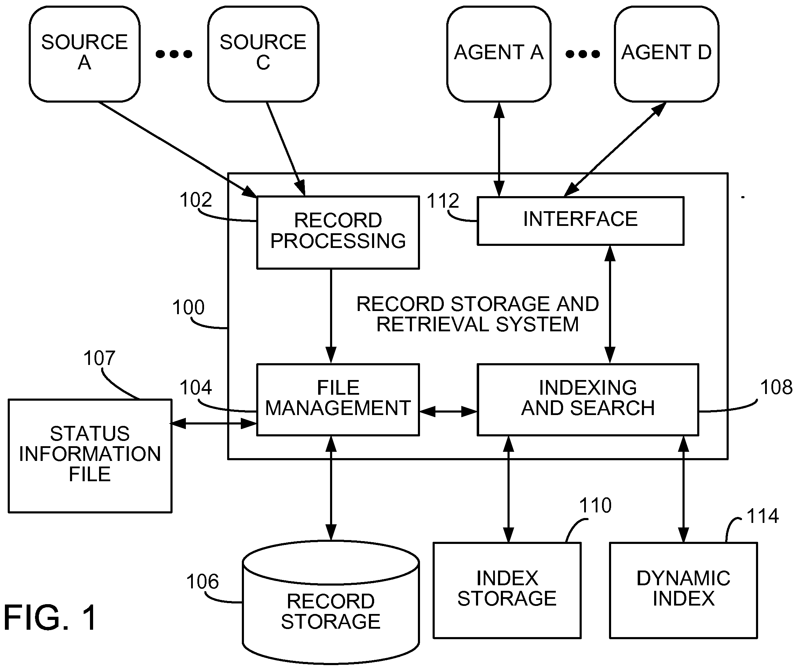

Referring to FIG. 1, a record storage and retrieval system 100 accepts data from one or more sources, such as SOURCE A - SOURCE C. The data include information that can be represented as individually accessible units of data. For example, a credit card company may receive data representing individual transactions from various retail companies. Each transaction is associated with values representing attributes such as a customer name, a date, a purchase amount, etc. A record processing module 102 ensures that the data is formatted according to a predetermined record format so that the values associated with a transaction are stored in a record. In some cases this may include transforming the data from the sources according to the record format. In other cases, one or more sources may provide the data already formatted according to the record format.

The record processing module 102 prepares records for storage in various types of data structures depending on various factors such as whether it may be necessary to access the stored records quickly. When preparing records for fast accessibility in an appendable lookup file, the processing module 102 appends the records as they arrive into the appendable lookup file and maintains an in-memory index, as described in more detail below. When preparing records for compressed storage in a compressed record file, the processing module 102 sorts the records by a primary key value that identifies each record (e.g., either a unique key identifying a single record, or a key that identifies multiple updated versions of a record), and divides the records into sets of records that correspond to non-overlapping ranges of primary key values. For example, each set of records may correspond to a predetermined number of records (e.g., 100 records).

A file management module 104 manages both the appendable lookup files (in situations in which they are used) and compressed lookup files. When managing compressed record files, the file management module 104 compresses each set of records into a compressed block of data. These compressed blocks are stored in a compressed record file in a record storage 106 (e.g., in a non-volatile storage medium such as one or more hard disk drives).

The system 100 also includes an indexing and search module 108 that provides an index that includes an entry for each of the blocks in a compressed record file. The index is used to locate a block that may include a given record, as described in more detail below. The index can be stored in an index file in an index storage 110. For example, while the index file can be stored in the same storage medium as the compressed record file, the index file may preferably be stored in a relatively faster memory (e.g., a volatile storage medium such as a Dynamic Random Access Memory) since the index file is typically much smaller than the compressed record file. The index can also be a dynamic index 114 that is maintained as an in-memory data structure. Some examples of a dynamic index 114 are hash tables, binary trees, and b-trees. The indexing and search module 108 also provides an interface for searching appendable lookup files, as described in more detail below.

In alternative implementations of the system 100, the sets of records can be processed to generate blocks using other functions in addition to or instead of compression to combine the records in some way (i.e., so that the block is not merely a concatenated set of records). For example, some systems may process a set of records to generate blocks of encrypted data.

An interface module 112 provides access to the stored records to human and/or computer agents, such as AGENT A - AGENT D. For example, the interface module 112 can implement an online account system for credit card customers to monitor their transactions. A request for transaction information meeting various criteria can be processed by the system 100 and corresponding records can be retrieved from within compressed blocks stored in the record storage 106.

A stream of incoming records from one or more sources may be temporarily stored before being processed to generate a compressed record file.

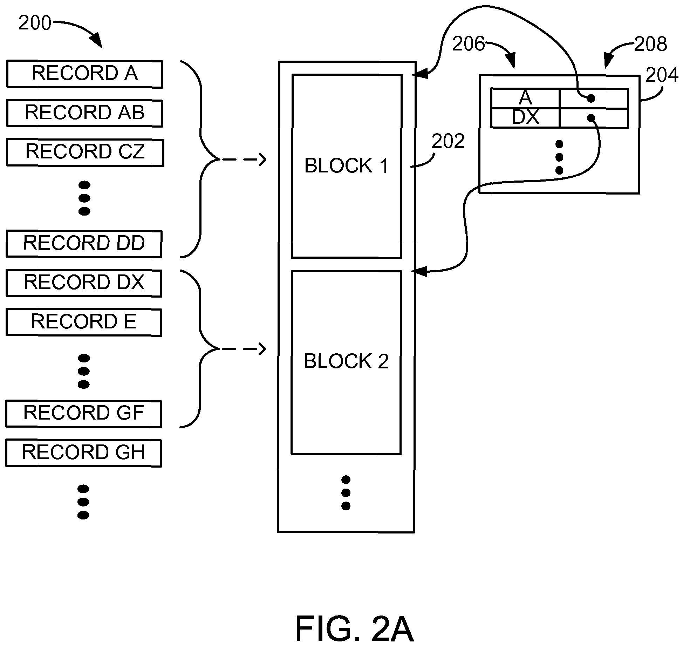

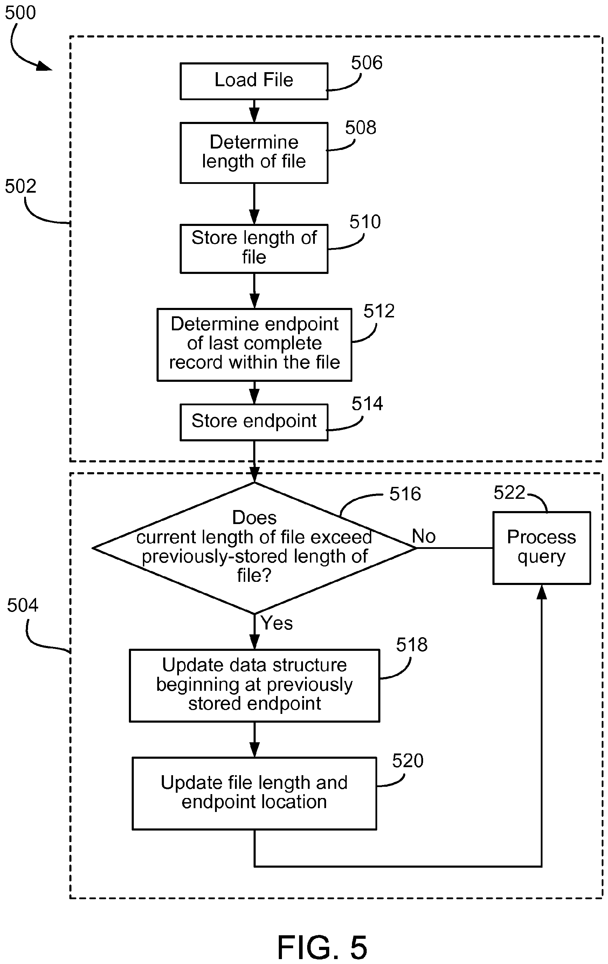

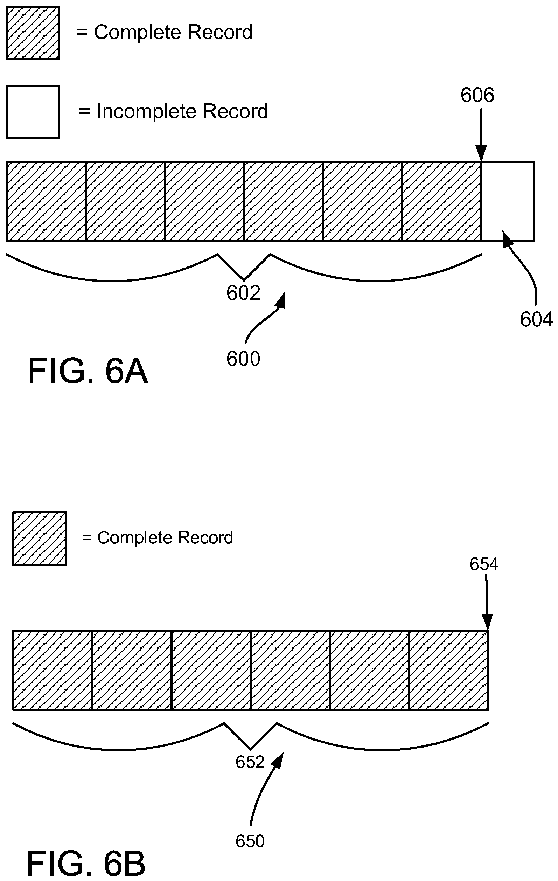

FIGS. 2A - 2D, 3A - 3B, and 4A - 4B show examples of managing records in compressed record files. FIGS. 5, and 6A - 6B show examples of managing records using appendable lookup files. Referring to FIG. 2A, the system 100 receives a set of records 200 to be stored in a compressed record file, and sorts the records according to values of a primary key.

A primary key value can uniquely identify a given item in a database that may be represented by one or more records (e.g., each record having a given primary key value may correspond to a different updated version of the item). The primary key can be a "natural key" that corresponds to one or more existing fields of a record. If there is no field that is guaranteed to be unique for each item, the primary key may be a compound key comprising multiple fields of a record that together are guaranteed or highly likely to be unique for each item. Alternatively, the primary key can be a "synthetic key" which can be assigned to each record after being received. For example, the system 100 can assign unique primary key values as sequentially incremented integers, or some other sequence of monotonically progressing values (e.g., time stamps). In this case, records representing different versions of the same item may be assigned different synthetic key values. If integers are used, the range of possible primary key values (e.g., as determined by the number of bits used) can be large enough so that if the primary key rolls over, any record previously assigned a given primary key value has been removed from the compressed record file. For example, old transactions may be removed and archived or discarded.

In the example shown in FIG. 2A, the records 200 are identified by alphabetically sorted primary key values: A, AB, CZ, ... The system 100 compresses a first set of *N* records having primary key values A - DD to generate a corresponding compressed block labeled BLOCK 1. The next set of records includes the next N of the sorted records having primary key values DX - GF. The file management module 104 can use any of a variety of lossless data compression algorithms (e.g., Lempel-Ziv type algorithms). Each successive compressed block is combined form a compressed record file 202.

The number N of records used to generate a compressed block, can be selected to trade off between compression efficiency and decompression speed. The compression may reduce the size of the data on average by a given factor R that depends on the nature of the data being compressed and on the size of the data being compressed (e.g., *R* is typically smaller when more data is being compressed). The compression may also have an associated overhead (e.g., compression related data) of average size *O*. The average size of the resulting compressed record file generated from *M* records each of size *X* can be expressed as ┌*M*/*N*┐(*RNX* + *O*), which for a large number of blocks can be approximated as *RMX* + *OM*/*N.* Thus, a larger value of *N* can in some cases provide greater compression both by reducing *R* and by reducing the contribution of the overhead to the size of the file. A smaller value of *N* reduces the time needed to decompress a given compressed block to access a record that may be contained in the block.

In other implementations, different compressed blocks may include different numbers of records. Each block may have a number of records according to a predetermined range. For example, the first block includes records with primary key values 1 - 1000, and the second block includes records with primary key values 1001 - 2000, etc. The number of records in the compressed blocks in this example could be different since not every primary key value necessarily exists (e.g., in the case of an existing numerical field used as a natural key).

In some implementations, different compressed blocks may include a target number of records in some cases, and in exceptional cases may include more or fewer records. For example, if a set of records ends with a record whose primary key value is different from the primary key value of the following record in the sorted order, those records are used to generate a compressed block. If the set of records ends with a record whose primary key value is the same as the primary key value of the following record in the sorted order, all the additional records having that primary key value are added to the set. In this way, the same primary key value does not cross over from one compressed block to the next.

The indexing and search module 108 generates an entry in an index file 204 for each of the compressed blocks. The index entries include a key field 206 that identifies each compressed block, for example, by the primary key of the first record in the corresponding uncompressed set of records. The entries also include a location field 208 that identifies the storage location of the identified compressed block within the compressed record file 202. For example, the location field can contain a pointer in the form of an absolute address in the record storage 106, or in the form of an offset from the address of the beginning of the compressed record file 202 in the record storage 106.

To search for a given record in the compressed record file 202, the module 108 can perform a search (e.g., a binary search) of the index file 204 based on the key field 206. For a provided key value (e.g., provided by one of the agents), the module 108 locates a block that includes records corresponding to a range of key values that includes the provided key value. The record with the provided key value may or may not have been included in the set of records used to generate the located block, but if the record existed in the records 200, that record would have been included since the records 200 were sorted by the primary key value. The module 108 then decompresses the located block and searches for a record with the provided key value. In cases in which the primary key value is not unique for each record, the module 108 may find multiple records with the provided key value in the compressed block. In this example in which the key field 206 includes the primary key of the first record in a set, the module 108 searches for two consecutive index entries that have key values earlier and later, respectively, than the provided key value, and returns the block corresponding to the entry with the earlier key value. In some cases, the provided key value may be the same as a key value in an index entry, in which case the module 108 returns the block corresponding to that entry.

In different implementations, there are different ways for the entries in the index file 204 to identify a range of key values corresponding to the records from which a corresponding block was generated. As in the implementation shown in FIG. 2A, the range of key values can be the range between the two extremum key values of the records used to generate a block (e.g., the first and last in a sorted sequence of alphabetical primary key values, or the minimum and maximum in a sorted sequence of numerical primary key values). The index entry can include either or both of the extrema that define the range. In some implementations, if the index entries include the minimum key value that defines a range for a given block, the last index entry associated with the last block in a compressed record file may also include a maximum key value that defines the range for that block. This maximum key value can then be used when searching the compressed record file to determine when a given key value is out of range.

Alternatively, the range of key values can be a range extending beyond the key values of the records used to generate a block. For example, in the case of a block generated from records with numerical primary key values between 1 and 1000, the smallest key value represented in the records may be greater than 1 and the largest key value represented in the records may be smaller than 1000. The index entry can include either or both of the extrema 1 and 1000 that define the range.

When additional records arrive after an initial group of records have been processed to generate a compressed record file, those records can be stored in a buffer and searched in uncompressed form. Alternatively, additional groups of records can be incrementally processed and stored as additional compressed record files accessible by additional index files. In some cases, even when compressing a small number of additional records may not provide a great reduction in storage size, it may still be advantageous to compress the additional records to maintain uniform procedures for accessing records. Additional records can be processed repeatedly at regular intervals of time (e.g., every 30 seconds or every 5 minutes), or after a predetermined number of additional records have been received (e.g., every 1000 records or every 10,000 records). If incoming records are processed based on time intervals, in some intervals there may be no incoming records or a small number of records that are all compressed into a single compressed block.

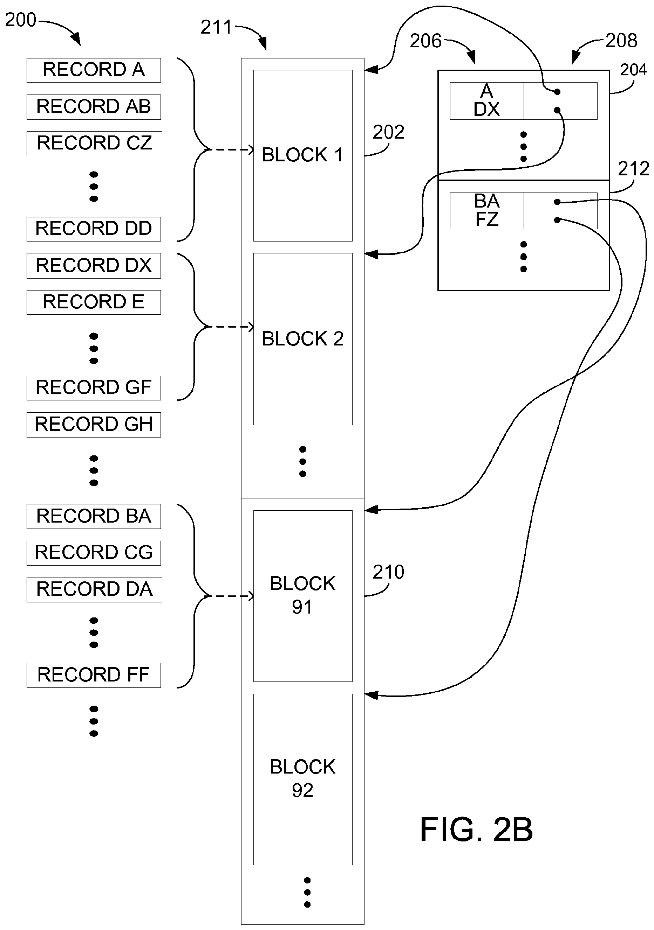

Referring to FIG. 2B, in an example in which additional records have been received by the system 100 after the initial compressed record file 202 has been generated, an additional compressed record file 210 can be appended to the initial compressed record file 202 to form a compound compressed record file 211. The system 100 sorts the additional records by primary key values and compresses sets of N records to generate compressed blocks of the compressed record file 210. The first compressed block in the appended file 210 labeled BLOCK 91 has primary key values BA - FF. The module 108 generates an additional index file 212 that includes entries that can be used to search for the additional records represented within the appended file 210. The new index file 212 can be appended to the previous index file 204.

Any number of compressed record files can be appended to form a compound compressed record file. If the indexing and search module 108 is searching for a record with a given key value within a compound compressed record file, the module 108 searches for the record within each of the appended compressed record files using the corresponding index files. Alternatively, an agent requesting a given record can specify some number of the compressed record files with a compound compressed record file to be searched (e.g., the 10 most recently generated, or any generated within the last hour).

After a given amount of time (e.g., every 24 hours) or after a given number of compressed record files have been appended, the system 100 can consolidate the files to generate a single compressed record file from a compound compressed record file and a new corresponding index file. After consolidation, a single index can be searched to locate a compressed block that may contain a given record, resulting in more efficient record access. At consolidation time, the system 100 decompresses the compressed record files to recover the corresponding sets of sorted records, sorts the records by primary key values, and generates a new compressed record file and index. Since each of the recovered sets of records is already sorted, the records can be sorted efficiently by merging the previously sorted lists according to the primary key values to generate a single set of sorted records.

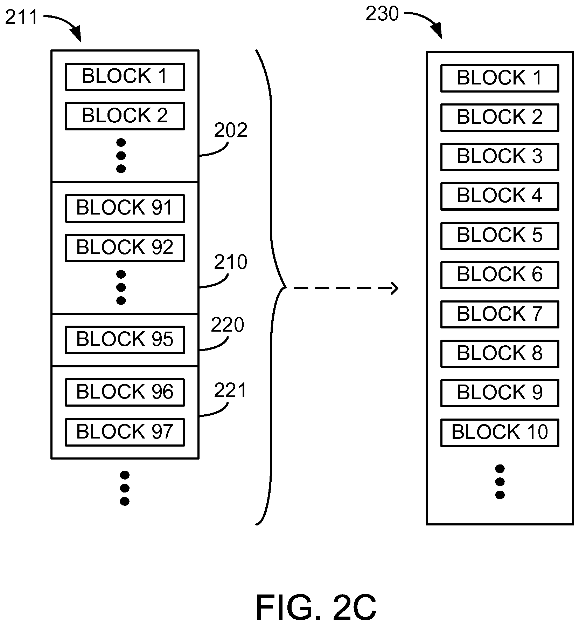

Referring to FIG. 2C, the compound compressed record file 211 includes the initial compressed record file 202, the additional compressed record file 210, and number of additional compressed record files 220, 221, ... depending on how many additional records have arrived and how often the records have been processed. Each compressed record file can have an associated index file that can be used to search for a given record in within the compressed blocks of that file. In this example, one of the compressed record files 220 is small enough to have only a single compressed block (BLOCK 95), and therefore does not necessarily need an associated index file, but can have associated data that indicates a range of primary key values in the block and its location in storage. After consolidation, the records recovered from the different appended compressed record files are processed to generate a single compressed record file 230.

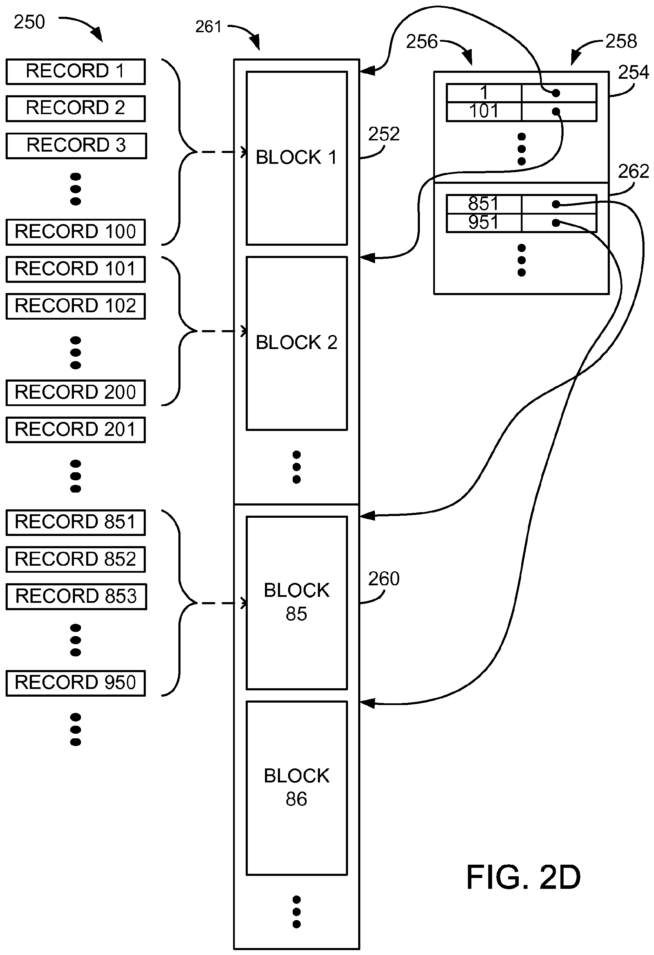

In the case of monotonically assigned primary keys, records are automatically sorted not only within compressed record files, but also from one file to the next, obviating the need to consolidate files in order to access a record in a single index search. Referring to FIG. 2D, the system 100 receives a set of records 250 that are identified by consecutive integers assigned in arrival order as primary keys for the records. Thus, the records 250 are automatically sorted by primary key. An initial compressed record file 252 includes compressed blocks each including 100 records in this example, and an index file 254 includes a key field 256 for the primary key value of the first record in a compressed block and a location field 258 that identifies the corresponding storage location. Since records that arrive after the initial compressed record file 252 has been generated will automatically have primary key values later in the sorted order, an appended compressed record file 260 and corresponding index file 262 do not need to be consolidated to enable efficient record access based on a single index search. For example, the index file 262 can simply be appended to the index file 254 and both indices can be searched together (e.g., in a single binary search) for locating a compressed block in either of the compressed record files 252 or 260.

The compound compressed record file 261 may optionally be consolidated to eliminate an incomplete block that may have been inserted at the end of the compressed record file 252. In such a consolidation, only the last compressed block in the first file 252 would need to be decompressed, and instead of merging the decompressed sets of records, the sets of records could simply be concatenated to form a new sorted set of records to be divided into sets of 100 records that are then compressed again to form a new compressed record file.

Another advantage of using a consecutive integer synthetic primary key values is that if the records are going to be partitioned based on the primary key value, the partitions can be automatically balanced since there are no gaps in the key values.

Any of a variety of techniques can be used to update records and invalidate any previous versions of the record that may exist in a compressed record file. In some cases, records don't need to be removed or updated individually (e.g., logs, transactions, telephone calls). In these cases, old records be removed and discarded or archived in groups of a predetermined number of compressed blocks, for example, from the beginning of a compressed record file. In some cases, entire compressed record files can be removed.

In some cases, one or more values of a record are updated by adding a new updated record for storage in a compressed block, and a previously received version of the record (with the same primary key value) may be left stored in a different compressed block. There could then multiple versions of a record and some technique is used to determine which is the valid version of the record. For example, the last version (most recently received) appearing in any compressed record file may be implicitly or explicitly indicated as the valid version, and any other versions are invalid. A search for a record with a given primary key in this case can include finding the last record identified by that primary key in order of appearance. Alternatively, a record can be invalidated without necessarily adding a new version of a record by writing an "invalidate record" that indicates that any previous versions of the record are not valid.

The system 100 mediates access to the compressed record files stored in the record storage 106 by different processes. Any of a variety of synchronization techniques can be used to mediate access to the compressed blocks within one or more compressed record files. The system 100 ensures that any processes that modify the files (e.g., by appending or consolidating data) do not interfere with one another. For example, if new records arrive while consolidation is occurring, the system 100 can wait until the consolidation process is finished, or can generate compressed blocks and store them temporarily before appending them to existing compressed record files. Processes that read from a compressed record file can load a portion of the file that is complete, and can ignore any incomplete portion that may be undergoing modification.

The system 100 stores additional data that enables a search for record based on an attribute of the record other than the primary key. A secondary index for a compressed record file includes information that provides one or more primary key values based on a value of an attribute that is designated as a secondary key. Each attribute designated as a secondary key can be associated with a corresponding secondary index. For example, each secondary index can be organized as a table that has rows sorted by the associated secondary key. Each row includes a secondary key value and one or more primary key values of records that include that secondary key value. Thus, if an agent initiates a search for any records that include a given secondary key value, the system 100 looks up the primary key(s) to use for searching the index of the compressed record file for the compressed block(s) that include the record(s). The secondary index may be large (e.g., on the order of the number of records) and in some cases may be stored in the storage medium that stores the compressed record files.

In some cases, the values of an attribute designated as a secondary key may be unique for each record. In such cases, there is a one-to-one correspondence between that secondary key and the primary key, and the interface module 112 can present that secondary key attribute as though it were the primary key to an agent.

Each secondary index can be updated as new compressed record files are appended to a compound compressed record file. Alternatively, a secondary key can be associated with a different secondary index for each compressed record file, and the secondary indices can be consolidated into a single secondary index when the compressed record files are consolidated.

A screening data structure can be associated with a compressed record file for determining the possibility that a record that includes a given attribute value is included in a compressed block of the file. For example, using an overlap encoded signature (OES) as a screening data structure enables the system 100 to determine that a record with a given key value (primary key or secondary key) is definitely not present (a "negative" result), or whether a record with the given key value has the possibility of being present (a "positive" result). For a positive result, the system accesses the appropriate compressed block to either retrieve the record (a "confirmed positive" result), or determine that the record is not present (a "false positive" result). For a negative result, the system can give a negative result to an agent without needing to spend time decompressing and searching the compressed block for a record that is not present. The size of the OES affects how often positive results are false positives, with larger OES size yielding fewer false positive results in general. For a given OES size, fewer distinct possible key values yields fewer false positives in general.

Other types of screening data structures are possible. A screening data structure for a given primary or secondary key can be provided for each compressed record file. Alternatively, a screening data structure for a key can be provided for each compressed block.

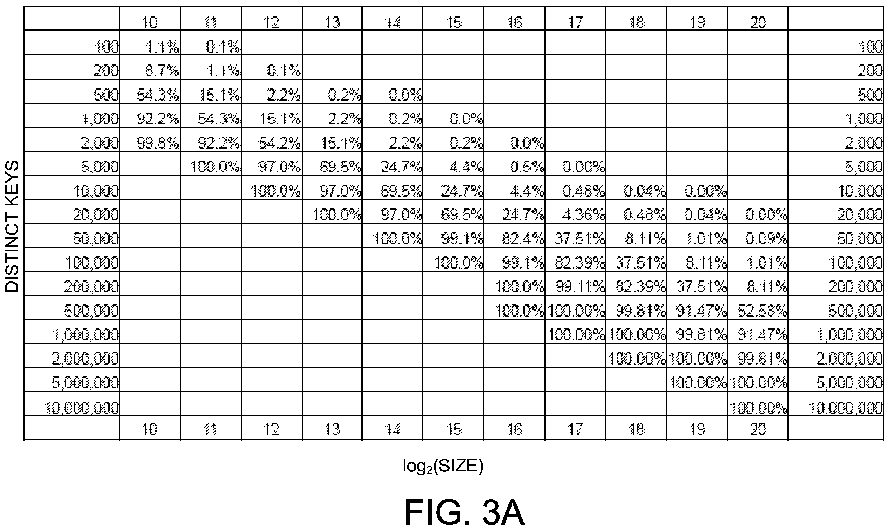

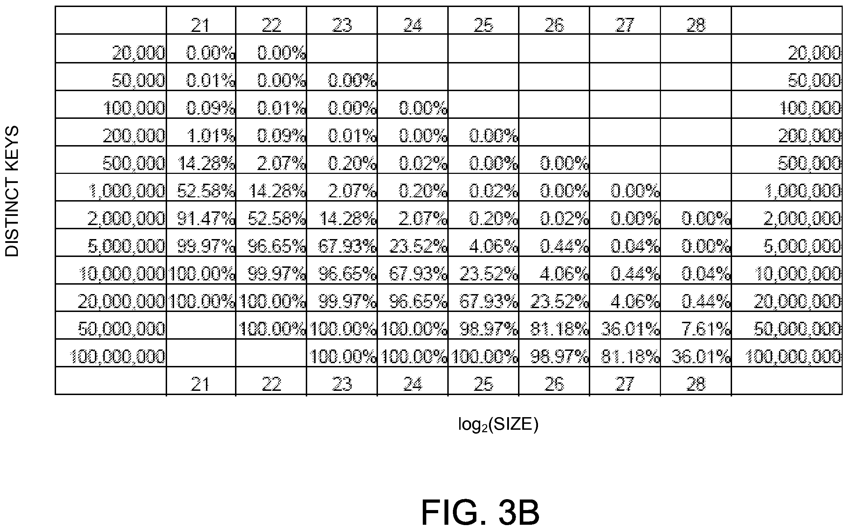

FIGS. 3A and 3B show tables that provide probability values for obtaining a false positive result for a key value for various sizes of an exemplary OES screening data structure (columns) and various numbers of distinct key values represented in the compressed record file (rows). For an OES, depending on the size of the OES and the number of distinct key values, the presence of more than one key value may be indicated in the same portion of the OES, potentially leading to a false positive result for one of those key values if the other is present. The size of this exemplary OES varies from 2¹⁰ = 1024 bits (in the table of FIG. 3A) to 2²⁸ = 256 Mbits (in the table of FIG. 3B). The number of distinct key values varies from 100 (in the table of FIG. 3A) to 100,000,000 (in the table of FIG. 3B). For both tables, the blank cells in the upper right correspond to 0% and the blank cells in the lower left correspond to 100%. For the cells in which the false positive probability is low (e.g., near zero), the screening data structure may be larger than necessary to provide adequate screening. For the cells in which the false positive probability is significant (e.g., > 50%), the screening data structure may be too small to provide adequate screening. This example corresponds to a technique for generating an OES using four hash codes per key value. Other examples of OES screening data structures could yield a different table of false positive probabilities for given numbers of distinct keys.

Since the number of distinct key values represented in a compressed record file may not be known, the system 100 can select the size of the screening data structure for the compressed record file based on the number of records from which the file was generated. In selecting the size, there is a trade-off between reducing false positive probabilities and memory space needed to store the screening data structure. One factor in this trade-off the likelihood of searching for absent key values. If most of the key values to be looked up are likely to be present in the decompressed records, the screening data structures may not be needed at all. If there is a significant probability that key values will not be found, then allocating storage space for relatively large screening data structures may save considerable time.

The size of a screening data structures associated with a compressed record file may depend on whether the file corresponds to an initial or consolidated large database of records, or a smaller update to a larger database. A relatively smaller screening data structure size can be used for compressed record files that are appended during regular update intervals since there are generally fewer distinct key values in each update. Also, the small size can reduce the storage space needed as the number of compressed record files grows after many updates. The size of the screening data structure can be based on the expected number of records and/or distinct key values in an update, and on the expected number of updates. For example, if updated files are appended every five minutes through a 24-hour period, there will be 288 compressed record files at the end of the day. The probability of at least one false positive result will be 288 times the appropriate value from the tables of FIGS. 3A and 3B (assuming the results for different updates are independent). After consolidation, a larger screening data structure may be appropriate for the consolidated compressed record file since the number of distinct key values may increase significantly.

A compressed record file can have a screening data structure for the primary key and for each secondary key, or for some subset of the keys. For example, the system 100 may provide a screening data structure for the primary key, and for only those secondary keys that are expected to be used most often in searching for records.

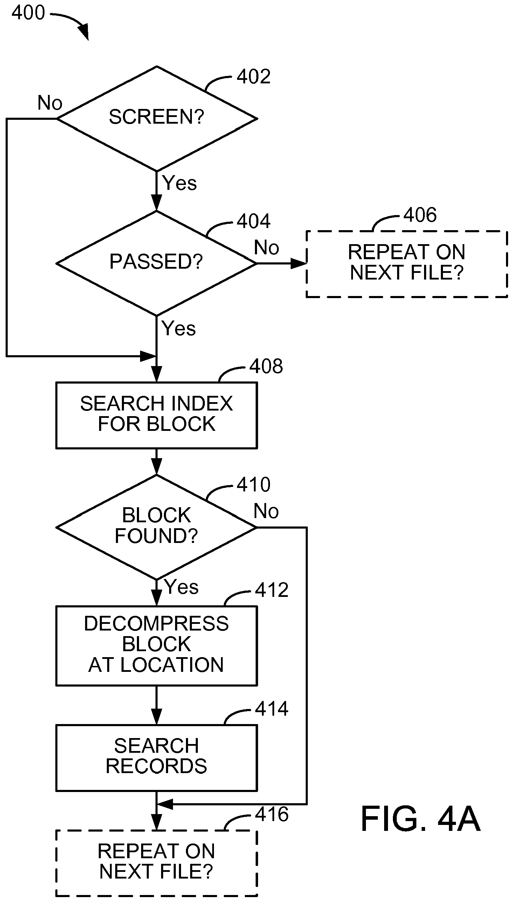

FIG. 4A shows a flowchart for a procedure 400 for searching for one or more records with a given primary key value. The procedure 400 determines 402 whether there is a screening data structure associated with a first compressed record file. If so, the procedure 400 processes 404 the screening data structure to obtain either a positive or negative result. If the given primary key value does not pass the screening (a negative result), then the procedure 400 checks 406 for a next compressed record file and repeats on that file if it exists. If the given primary key value does pass the screening (a positive result), then the procedure 400 searches 408 the index for a block that may contain a record with the given primary key value. If no screening data structure is associated with the compressed record file, then the procedure 400 searches 408 the index without performing a screening.

After searching 408 the index, if a compressed block associated with a range of key values that includes the given primary key value is found 410, then the procedure 400 decompresses 412 the block at the location identified by the index entry and searches 414 the resulting records for one or more records with the given primary key value. The procedure then checks 416 for a next compressed record file and repeats on that file if it exists. If no compressed block is found (e.g., if the given primary key value is smaller than the minimum key value in the first block or greater than the maximum key value in the last block), then the procedure 400 checks 416 for a next compressed record file and repeats on that file if it exists.

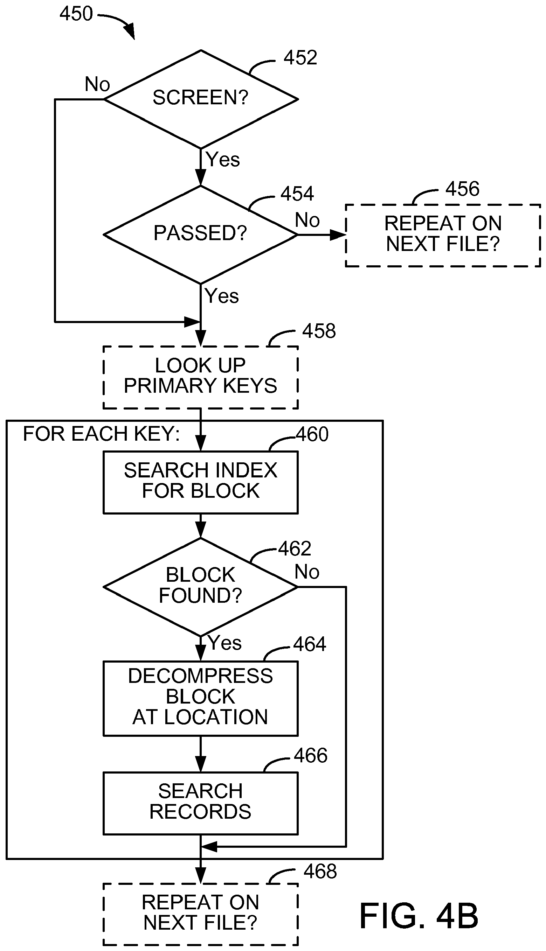

FIG. 4B shows a flowchart for a procedure 450 for searching for one or more records with a given secondary key value. The procedure 450 determines 452 whether there is a screening data structure associated with a first compressed record file. If so, the procedure 450 processes 454 the screening data structure to obtain either a positive or negative result. If the given secondary key value does not pass the screening (a negative result), then the procedure 450 checks 456 for a next compressed record file and repeats on that file if it exists. If the given secondary key value does pass the screening (a positive result), then the procedure 450 looks up 458 the primary keys that correspond to records containing the given secondary key. If no screening data structure is associated with the compressed record file, then the procedure 450 looks up 458 the primary keys without performing a screening.

For each of the primary keys found, the procedure 450 searches 460 the index for a block that may contain a record with the given primary key value. After searching 460 the index, if a compressed block associated with a range of key values that includes the given primary key value is found 462, then the procedure 450 decompresses 464 the block at the location identified by the index entry and searches 466 the resulting records for one or more records with the given primary key value. The procedure then checks 468 for a next compressed record file and repeats on that file if it exists. If no compressed block is found, then the procedure 450 checks 468 for a next compressed record file and repeats on that file if it exists.

Multiple records found with a given primary or secondary key can be returned by procedure 400 or procedure 450 in order of appearance, or in some cases, only the last version of the record is returned.

The file management module 104 also manages storage and access of records using appendable lookup files. In one example of using appendable lookup files, the system 100 manages a large primary data set (e.g., encompassing hundreds of terabytes of primary data). This primary data set will generally be stored in one or a series of multiple compressed record files (possibly concatenated into a compound compressed record file). However, if the data needs to be visible shortly after it arrives (e.g., within a minute or less) then it may be useful to supplement the compressed record file with an appendable lookup file. The appendable lookup file is able to reduce the latency between the time when new data arrives and the time when that data becomes available to various query processes. The new data could result, for example, from another process actively writing data to the file. The system 100 is able to manage access to partial appendable lookup files that may be incomplete. In some systems, if a query process encountered a partial file, a program error would result. To avoid this program error, some of these systems would reload an index associated with the file every time the file was queried. Reloading the index on every query can be inefficient in some situations, and may consume an appreciable amount of system resources.

Generally, appendable lookup files are uncompressed data files which are tolerant of partial records added at the end of the file. An appendable lookup file is able to recognize incomplete records, and is able to process query requests even when the file queried contains incomplete records. An appendable lookup file does not have the type of index file as described above for the compressed record files; rather, an appendable lookup file has a "dynamic index" that maps each record's location in a data structure stored in a relatively fast working memory (e.g., a volatile storage medium such as a Dynamic Random Access Memory). For example, these dynamic indexes could be hash tables, binary trees, b-trees, or another type of associative data structure. FIG. 5 is an example of the process by which an appendable lookup file is queried. The process flow 500 related to the operation of an appendable lookup file includes a load process 502 and a query process 504. After the file is loaded 506 (such as when the file is queried), the length of the file is determined 508. After the length of the file has been determined 508, the determined length is stored 510 in a memory location, such as in the working memory.

The system then determines 512 an "endpoint," which is a location representing the end of the last complete record within the file. In some cases, such as when no new data is being written to the file, the endpoint would simply represent the end of the file. The endpoint could also represent a location that immediately precedes the first segment of new data (see FIG. 6). After the endpoint has been determined 512, it is stored 514 in a memory location, such as in main memory.

During the query process 504, the system 100 decides whether to process the query 522, or to update 518 the associative data structure associated with the queried file. To make this determination the system compares 516 the current length of the file to the length of the file that was previously determined and stored in memory. This determination can be made in a number of ways. For example, the system can examine the file metadata, file headers, or can search the file for new line characters. If the length of the file does not exceed the previously-stored file length, then no new data has been added to the end of the data file, and the query is processed 522. If the current length of the file exceeds the previously-stored length of the file, the associative data structure is updated 518, beginning at the previously-stored endpoint. In this manner, the associative data structure can be updated without having to reload or rebuild it entirely. Instead, the data that is already loaded in memory remains loaded, and new data is appended beginning at the previously-stored endpoint. Before processing the query, the file length and the endpoint are also updated 520. Other steps such as error checking can be performed in this process. For example, if the system determines that the current length of the file is smaller than the previously-stored length of the file, an error can be flagged.

FIG. 6A and 6B are examples of the location of endpoints within a file, as determined by step 512 in FIG. 5. In FIG. 6a, appendable lookup file 600 includes complete records 602 and incomplete record 604. In this case, the endpoint 606 is a location representing the end of the last complete record within appendable lookup file 600, and immediately precedes the beginning of incomplete record 604.

In the example of FIG. 6B, appendable lookup file 650 is comprised of entirely complete records 652. In this case, endpoint 654 again represents the end of the last complete record within appendable lookup file 650; however, endpoint 654 also represents the end of the file.

Data may be continuously appended to the appendable lookup files which, in turn, are continuously updated. As a result, the appendable lookup files become increasingly large in size, and the time it takes to load an appendable lookup file increases correspondingly. Appendable lookup files may be combined with other forms of dynamically loadable index files to avoid the appendable lookup files becoming too large to load in a desirable amount of time.

In some applications, a continuous stream of data to be loaded into a queriable data structure may be arriving at a high rate of speed, and access to the data soon after it has arrived may be desired. When the data arrives, it is handled by a dual process. First, the data is replicated, and is simultaneously added to both an appendable lookup file (so that it is immediately visible to and accessible by the file system) and to a second file or "buffer." The data continues to accumulate in both the appendable lookup file and the buffer until a predefined condition is satisfied. The predefined condition may be a number of criteria. For example, the predefined criteria may be a length of time, a file size, an amount of data, or a number of records within the data.

After the predefined condition is satisfied, the block of data that has accumulated in the buffer is added to a compressed record file for longer term storage. After the data is added to the compressed record file, a new appendable lookup file is created and begins to collect data from the data stream. The old appendable lookup file is finalized, and is deleted after the compressed record file contains all of the corresponding data.

While the data is being received by both the buffer and the appendable lookup file, the data in the buffer can be sorted. Because sorting the data consumes a substantial amount of time and system resources, it is advantageous to begin the sorting process as early as possible to allow the data to be transferred to the compressed record file more quickly.

Alternatively, the appendable lookup file can be used as a buffer. In this embodiment, data is accumulated in the appendable lookup file until the predefined condition is satisfied. The contents of the appendable lookup file are then added to the compressed record file while, simultaneously, the old appendable lookup file is finalized and a new appendable lookup file is created and begins to collect data from the data stream. Again, the old appendable lookup file is deleted after the compressed record file contains all of the corresponding data.

During each cycle of this process, it would be desirable to simultaneously add data to the compressed record files and delete all the data in the appendable lookup files. However, because the two updates may cause race conditions, there could be a significant window in which the old appendable lookup file had been deleted but the compressed record file had not yet been updated with its data. This would result in a temporary loss of data. In order to prevent this, the old appendable lookup file can be kept for an additional cycle of this process. The indexing and search module 108 is configured to detect conditions in which duplicate data may exist in both the appendable lookup file and the compressed record file, and the indexing and search module 108 filters out duplicate data if a query is made during this condition.

Alternatively, the file management module 104 may maintain status information in, for example, a status information file 107 to coordinate the retirement of an appendable lookup file after either the data buffer has been written to the compressed lookup file or the contents of the appendable lookup file have been added to the compressed lookup file. The status information file 107 identifies the currently active record related data structures. For example, the status information file 107 identifies all of the compressed data files and the number of blocks they contain along with the all of the appendable lookup files that are currently active. The indexing and search module 108 will disregard any appendable lookup files, compressed data files, and blocks within compressed data files that do not appear in the status information file. When a new appendable lookup file is created, the following is an example of a protocol that is observed by the file management module 104: the file management module 104 adds new data to the compressed data file and creates a new appendable lookup file; the file management module 104 locks the status information file to prevent it from being accessed by the indexing and search module 108; the file management module updates the status information file to reflect the addition of new data to the compressed data file, the removal of the old appendable lookup file, and the creation of the new appendable lookup file; the file management module unlocks the status information file, allowing it to once again be accessed by the indexing and search module 108; the file management module 104 removes the old appendable lookup file.

The indexing and search module 108 follows the following exemplary protocol: it locks the status information file to prevent the file management module 104 from updating it; it performs the query in accordance with the appendable lookup files and compressed data files identified in the status information file; it unlocks the status information file to once more permit the file management module 104 to update the status information file.

The status information file 107 may be stored either on disk or in memory. This protocol ensures that the search module will either see the old appendable lookup file and the compressed data file prior to the incorporation of data from the old appendable lookup file, or the new appendable lookup file and the updated compressed data file.

When a query is made when both the new appendable lookup file and the old appendable lookup file exist at the same time, in one implementation, the system looks in a directory to see which appendable lookup file is currently active (e.g., either the new appendable lookup file or the old appendable lookup file may be active since the new appendable lookup file may not become active until some amount of delay after it has been created). Alternatively, when the system processes queries, it first looks in the newest appendable lookup file, then in the old appendable lookup file. If the queried data is still not located, the system looks in the compressed record file.

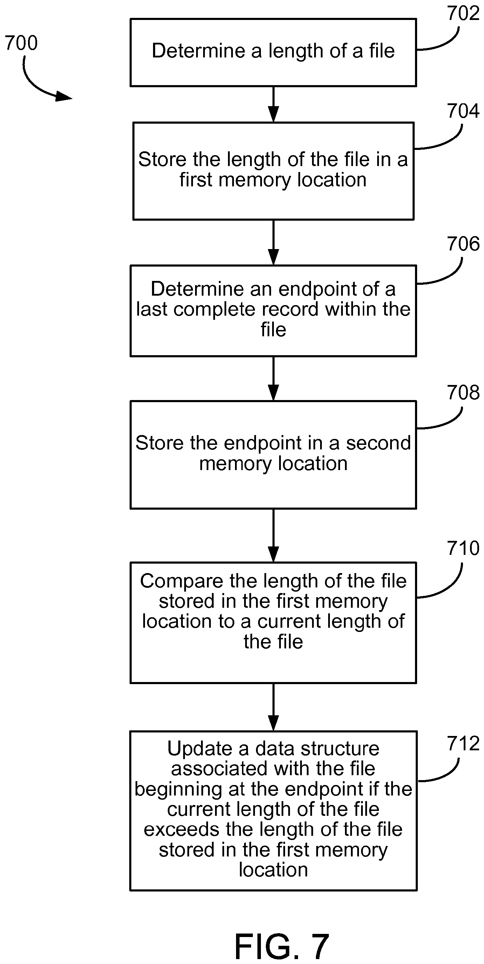

In FIG. 7, a procedure 700 performed by system 100 determines a length of a file 702 and stores the length of the file in a first memory location 704. The procedure 700 determines an endpoint of a last complete record within the file 706 and stores the endpoint in a second memory location 708. The procedure compares the length of the file stored in the first memory location to a current length of the file 710 and updates a data structure associated with the file beginning at the endpoint if the current length of the file exceeds the length of the file stored in the first memory location 712.

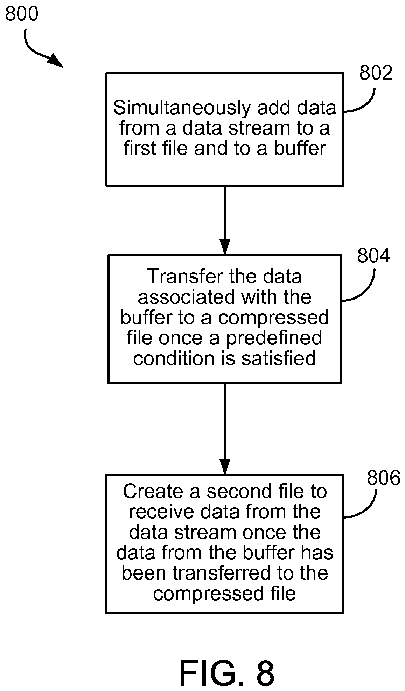

In FIG. 8, a procedure 800 performed by system 100 simultaneously adds data from a data stream to a first file and to a buffer 802, and transfers the data associated with the buffer to a compressed file after a predefined condition is satisfied 804. The procedure 800 creates a second file to receive data from the data stream after the data from the buffer has been transferred to the compressed file 806.

The record storage and retrieval approach described above, including the modules of the system 100 and the procedures performed by the system 100, can be implemented using software for execution on a computer. For instance, the software forms procedures in one or more computer programs that execute on one or more programmed or programmable computer systems (which may be of various architectures such as distributed, client/server, or grid) each including at least one processor, at least one data storage system (including volatile and non-volatile memory and/or storage elements), at least one input device or port, and at least one output device or port. The software may form one or more modules of a larger program, for example, that provides other services related to the design and configuration of computation graphs. The nodes and elements of the graph can be implemented as data structures stored in a computer readable medium or other organized data conforming to a data model stored in a data repository.

The software may be provided on a storage medium, such as a CD-ROM, readable by a general or special purpose programmable computer or delivered (encoded in a propagated signal) over a communication medium of a network to the computer where it is executed. All of the functions may be performed on a special purpose computer, or using special-purpose hardware, such as coprocessors. The software may be implemented in a distributed manner in which different parts of the computation specified by the software are performed by different computers. Each such computer program is preferably stored on or downloaded to a storage media or device (e.g., solid state memory or media, or magnetic or optical media) readable by a general or special purpose programmable computer, for configuring and operating the computer when the storage media or device is read by the computer system to perform the procedures described herein. The inventive system may also be considered to be implemented as a computer-readable storage medium, configured with a computer program, where the storage medium so configured causes a computer system to operate in a specific and predefined manner to perform the functions described herein.

A number of embodiments of the invention have been described. Nevertheless, it will be understood that various modifications may be made without departing from the scope of the invention. For example, some of the steps described above may be order independent, and thus can be performed in an order different from that described.

It is to be understood that the foregoing description is intended to illustrate and not to limit the scope of the invention, which is defined by the scope of the appended claims. For example, a number of the function steps described above may be performed in a different order without substantially affecting overall processing. Other embodiments are within the scope of the following claims.

## Claims

1. A method for querying a file (700) containing a plurality of records, the method including:
receiving data for one or more records to be added to a file that is stored in a non-volatile storage medium,
receiving a query of records in the file, and
querying the file concurrently with adding at least some of the received data to the file, where the querying includes:
determining (702) a length of the file, and storing the length of the file in a first memory location;
determining (706) a location of an endpoint of a last complete record within the file and storing data representative of the location of the endpoint in a second memory location;
comparing (710) the length of the file stored in the first memory location to a current length of the file; and
updating (712) an index distinct from the file, the index stored in a volatile storage medium and associated with the file, the updating beginning at a location in the index that is associated with the endpoint if the current length of the file exceeds the stored length of the file, wherein the index includes data that can be used to identify a storage location of at least one record in the file.

2. The method of claim 1 wherein the index includes an associative data structure.

3. The method of claim 1 wherein the endpoint also represents an end of the file.

4. The method of claim 1 wherein the endpoint precedes an incomplete record in the file.

5. The method of claim 1, comprising checking the file for errors, including determining whether the current length of the file is smaller than the length of the file stored in the first memory location.

6. A system for querying a file (700) containing a plurality of records, the system including:
means for receiving: data for one or more records to be added to a file that is stored in a non-volatile storage medium, and a query of records in the file, and
means for querying the file concurrently with adding at least some of the received data to the file, where the querying includes:
determining (702) a length of the file, and storing the length of the file in a first memory location;
determining (706) a location of an endpoint of a last complete record within the file and storing data representative of the location of the endpoint in a second memory location;
comparing (710) the length of the file stored in the first memory location to a current length of the file; and
updating (712) an index distinct from the file, the index stored in a volatile storage medium and associated with the file, the updating beginning at a location in the index that is associated with the endpoint if the current length of the file exceeds the stored length of the file, wherein the index includes data that can be used to identify a storage location of at least one record in the file.

7. A computer-readable medium that stores executable instructions for use in obtaining a value from a device signal, the instructions for causing a computer to perform the method of any of claims 1 to 5.

8. A computer-readable medium according to claim 7, wherein the index includes an associative data structure.

## Patentansprüche

1. Verfahren zum Abfragen einer Datei (700), die eine Vielzahl von Datensätzen enthält, wobei das Verfahren Folgendes beinhaltet:
Empfangen von Daten für einen oder mehrere Datensätze, die zu einer Datei hinzuzufügen sind, die in einem nichtflüchtigen Speichermedium gespeichert ist,
Empfangen einer Abfrage von Datensätzen in der Datei und Abfragen der Datei gleichzeitig mit dem Hinzufügen mindestens einiger der empfangenen Daten zur Datei, wo das Abfragen Folgendes beinhaltet:
Bestimmen (702) einer Länge der Datei und Speichern der Länge der Datei an einem ersten Speicherort;
Bestimmen (706) eines Orts eines Endpunkts eines letzten vollständigen Datensatzes in der Datei und Speichern von Daten, die für den Ort des Endpunkts repräsentativ sind, an einem zweiten Speicherort;
Vergleichen (710) der Länge der Datei, die am ersten Speicherort gespeichert ist, mit einer aktuellen Länge der Datei und
Aktualisieren (712) eines Index, der sich von der Datei unterscheidet, wobei der Index in einem flüchtigen Speichermedium gespeichert und mit der Datei verknüpft ist, wobei das Aktualisieren an einem Ort im Index beginnt, der mit dem Endpunkt verknüpft ist, wenn die aktuelle Länge der Datei die gespeicherte Länge der Datei überschreitet, wobei der Index Daten beinhaltet, die verwendet werden können, um einen Speicherort mindestens eines Datensatzes in der Datei zu identifizieren.

2. Verfahren nach Anspruch 1, wobei der Index eine assoziative Datenstruktur beinhaltet.

3. Verfahren nach Anspruch 1, wobei der Endpunkt auch ein Ende der Datei repräsentiert.

4. Verfahren nach Anspruch 1, wobei der Endpunkt einem unvollständigen Datensatz in der Datei vorausgeht.

5. Verfahren nach Anspruch 1, das das Überprüfen der Datei auf Fehler umfasst, das das Bestimmen, ob die aktuelle Länge der Datei kleiner als die Länge der am ersten Speicherort gespeicherten Datei ist, beinhaltet.

6. System zum Abfragen einer Datei (700), die eine Vielzahl von Datensätzen enthält, wobei das System Folgendes beinhaltet:
ein Mittel zum Empfangen: von Daten für einen oder mehrere Datensätze, die zu einer Datei hinzuzufügen sind, die in einem nichtflüchtigen Speichermedium gespeichert ist, und einer Abfrage von Datensätzen in der Datei und ein Mittel zum Abfragen der Datei gleichzeitig mit dem Hinzufügen mindestens einiger der empfangenen Daten zur Datei, wo das Abfragen Folgendes beinhaltet:
Bestimmen (702) einer Länge der Datei und Speichern der Länge der Datei an einem ersten Speicherort;
Bestimmen (706) eines Orts eines Endpunkts eines letzten vollständigen Datensatzes in der Datei und Speichern von Daten, die für den Ort des Endpunkts repräsentativ sind, an einem zweiten Speicherort;
Vergleichen (710) der Länge der Datei, die am ersten Speicherort gespeichert ist, mit einer aktuellen Länge der Datei und
Aktualisieren (712) eines Index, der sich von der Datei unterscheidet, wobei der Index in einem flüchtigen Speichermedium gespeichert und mit der Datei verknüpft ist, wobei das Aktualisieren an einem Ort im Index beginnt, der mit dem Endpunkt verknüpft ist, wenn die aktuelle Länge der Datei die gespeicherte Länge der Datei überschreitet, wobei der Index Daten beinhaltet, die verwendet werden können, um einen Speicherort mindestens eines Datensatzes in der Datei zu identifizieren.

7. Computerlesbares Medium, auf dem ausführbare Anweisungen zur Verwendung zum Erhalten eines Werts von einem Vorrichtungssignal gespeichert sind, wobei die Anweisungen einen Computer veranlassen, das Verfahren nach einem der Ansprüche 1 bis 5 durchzuführen.

8. Computerlesbares Medium nach Anspruch 7, wobei der Index eine assoziative Datenstruktur beinhaltet.

## Revendications

1. Procédé d'interrogation d'un fichier (700) contenant une pluralité d'enregistrements, le procédé comprenant les étapes consistant à :
recevoir des données pour un ou plusieurs enregistrements à ajouter à un fichier qui est stocké sur un support de stockage non volatil,
recevoir une interrogation d'enregistrements dans le fichier, et
interroger le fichier simultanément à l'ajout d'au moins une partie des données reçues au fichier, l'interrogation comprenant les étapes consistant à :
déterminer (702) une longueur du fichier, et stocker la longueur du fichier dans un premier emplacement de mémoire ;
déterminer (706) l'emplacement d'un point de fin d'un dernier enregistrement complet à l'intérieur du fichier et stocker des données représentatives de l'emplacement du point de fin dans un deuxième emplacement de mémoire ;
comparer (710) la longueur du fichier stockée dans le premier emplacement de mémoire à une longueur actuelle du fichier ; et
mettre à jour (712) un index distinct du fichier, l'index étant stocké sur un support de stockage volatil et associé au fichier, la mise à jour commençant à un emplacement dans l'index qui est associé au point de fin si la longueur actuelle du fichier dépasse la longueur stockée du fichier, l'index comprenant des données qui peuvent être utilisées pour identifier un emplacement de stockage d'au moins un enregistrement dans le fichier.

2. Procédé selon la revendication 1, l'index comprenant une structure de données associative.

3. Procédé selon la revendication 1, le point de fin représentant également une fin du fichier.

4. Procédé selon la revendication 1, le point de fin précédant un enregistrement incomplet dans le fichier.

5. Procédé selon la revendication 1, comportant la vérification du fichier pour déceler des erreurs, comprenant l'étape consistant à déterminer si la longueur actuelle du fichier est plus petite que la longueur du fichier stockée dans le premier emplacement de mémoire.

6. Système d'interrogation d'un fichier (700) contenant une pluralité d'enregistrements, le système comprenant :
des moyens servant à recevoir : des données pour un ou plusieurs enregistrements à ajouter à un fichier qui est stocké sur un support de stockage non volatil, et une interrogation d'enregistrements dans le fichier, et
des moyens servant à interroger le fichier simultanément à l'ajout d'au moins une partie des données reçues au fichier, l'interrogation comprenant les étapes consistant à :
déterminer (702) une longueur du fichier, et stocker la longueur du fichier dans un premier emplacement de mémoire ;
déterminer (706) l'emplacement d'un point de fin d'un dernier enregistrement complet à l'intérieur du fichier et stocker des données représentatives de l'emplacement du point de fin dans un deuxième emplacement de mémoire ;
comparer (710) la longueur du fichier stockée dans le premier emplacement de mémoire à une longueur actuelle du fichier ; et
mettre à jour (712) un index distinct du fichier, l'index étant stocké sur un support de stockage volatil et associé au fichier, la mise à jour commençant à un emplacement dans l'index qui est associé au point de fin si la longueur actuelle du fichier dépasse la longueur stockée du fichier, l'index comprenant des données qui peuvent être utilisées pour identifier un emplacement de stockage d'au moins un enregistrement dans le fichier.

7. Support lisible par ordinateur qui stocke des instructions exécutable destinées à être utilisées dans l'obtention d'une valeur à partir d'un signal de dispositif, les instructions servant à amener un ordinateur à effectuer le procédé selon l'une quelconque des revendications 1 à 5.

8. Support lisible par ordinateur selon la revendication 7, l'index comprenant une structure de données associative.
